# EUROPÄISCHE PATENTSCHRIFT

(11) **EP 0 528 307 B1**
(45) Veröffentlichungstag und Bekanntmachung des Hinweises auf die Patenterteilung: **22.05.1996**
(21) Anmeldenummer: 92113543.0
(22) Anmeldetag: 08.08.1992
(51) Int. Cl.: B60S 1/40

(54) **Verbindungsstück für einen Scheibenwischer**
Joining piece for a windshield wiper
Connecteur d'essuie-glace

(30) Priorität: 16.08.1991 DE 4127101
(43) Veröffentlichungstag der Anmeldung: 24.02.1993
(73) Patentinhaber: ITT Automotive Europe GmbH, D-60488 Frankfurt am Main (DE)
(72) Erfinder: Schael, Oliver, W-7145 Markgröningen (DE)

(56) Entgegenhaltungen:
- EP-A- 0 329 515
- DE-A- 2 829 437
- DE-A- 2 848 553
- DE-A- 3 222 761
- DE-A- 3 842 955
- GB-A- 1 574 571

## Beschreibung

### Beschreibung für folgende Vertragsstaaten : ES, FR, GB, IT

Die Erfindung geht aus von einem Verbindungsstück für einen Scheibenwischer, das zur Anlenkung eines Wischblattes an einen mit einem hakenförmigen Ende versehenen Wischarm vorgesehen ist und das im wesentlichen eine U-Form mit zwei Schenkeln aufweist, die zwischen sich eine Aufnahme für einen Gelenkbolzen eines Wischblattes bilden. Das U-förmige Verbindungsstück ist dabei vom Haken des Wischarmes umgreifbar, und ein federnd auslenkbarer Rastvorsprung greift in eine entsprechende Ausnehmung am Wischarm ein.

Verbindungsstücke zum Anlenken eines Wischblattes an das hakenförmige Ende eines Wischarms sind heute meist aus Kunststoff hergestellt und besitzen im wesentlichen eine U-Form mit zwei in der Betriebsposition sich in Längsrichtung des Wischblatts erstreckenden Schenkeln, die zwischen sich eine Aufnahme für einen Gelenkbolzen des Wischblatts bilden und vom hakenförmigen Ende des Wischarms umgreifbar sind. In dem einen oder in dem anderen Schenkel des hakenförmigen Endes des Wischarms befindet sich ein Durchbruch, in den nach ordnungsgemäßer Montage eines Wischblatts am Wischarm ein federnd aus lenkbarer Vorsprung des Verbindungsstücks, der üblicherweise als Rastnase ausgebildet ist, eingreift und so verhindert, daß das Verbindungsstück aus dem hakenförmigen Ende des Wischarms herausrutscht. Der Vorsprung kann sich, sofern die Schenkel insgesamt gegeneinander federnd sind, direkt an einem Schenkel oder auch an einer an einer aus einem Schenkel längs ausgeschnittenen federnden Zunge befinden. Ein Verbindungsstück mit nur einem federnd auslenkbaren Vorsprung ist aus der DE-A-32 22 761 bekannt.

Es gibt Wischarme mit unterschiedlichen Enden auf dem Markt. Da Fahrzeuge mit unterschiedlichen Wischarmen oft mit gleichen Wischblättern ausgestattet sind, kann man zwar im Ersatzteilhandel das gleiche Wischblatt für verschiedene Fahrzeugfabrikate und verschiedene Typen des gleichen Fabrikats anbieten, muß jedoch der Verkaufspackung unterschiedliche Verbindungsstücke beilegen, von denen nur eines verwendet wird, um das Wischblatt an einem bestimmten Wischarm zu befestigen. Alle anderen beigelegten Verbindungsstücke werden fortgeworfen. Um die Kosten für diese Verbindungsstücke einzusparen und um dem Käufer den Austausch eines Wischblattes zu erleichtern, ist man bestrebt, ein Verbindungsstück so auszulegen, daß es zum Anlenken eines Wischblattes an verschiedenartige Wischarme geeignet ist.

Aus der DE-A-28 29 437 ist ein solches Verbindungsstück bekannt. Aus einem Schenkel dieses Verbindungsstücks ist längs eine federnde Zunge ausgeschnitten, auf der zwei in Längsrichtung der Schenkel gegeneinander versetzte Vorsprünge in Form von Rastnasen einstückig angebracht sind. Die eine Rastnase befindet sich an der Außenseite der Zunge, die dem anderen Schenkel abgekehrt ist, und die andere Rastnase befindet sich an der Innenseite der Zunge, die dem anderen Schenkel zugekehrt ist. Die Rastnase an der Außenseite ist dafür vorgesehen, in einen Durchbruch einzugreifen, der sich in dem hakenförmigen und die Schenkel des Verbindungsstücks umgreifenden Ende eines Wischarms befindet. Die Rastnase an der Innenseite soll in den Durchbruch eines Wischarms mit einem geraden Ende eingreifen, das zwischen den Schenkeln in das Verbindungsstück hineingeschoben wird. Mit dem geschilderten Verbindungsstück kann also das Wischblatt sowohl mit einem Wischarm mit einem hakenförmigen als auch mit einem Wischarm mit einem geraden Ende verbunden werden.

Auf dem Markt befindliche Wischarme unterscheiden sich nicht nur darin, daß die einen ein hakenförmiges, die anderen ein gerades Ende haben. Unterschiede bestehen auch innerhalb der Gruppe von Wischarmen mit hakenförmigen Enden, wobei vor allem die Länge des Hakens und die Lage des Durchbruchs bezüglich des Scheitels des Hakens voneinander differieren. Aus der EP-A-O 329 515 ist ein Verbindungsstück bekannt, mit dem ein Wischblatt an Wischarme angelenkt werden kann, die sich in ihrem hakenförmigen Ende unterscheiden und von dem die Erfindung ausgeht.

Dieses Verbindungsstück besitzt zwei in Längsrichtung der Schenkel gegeneinander versetzte, federnd auslenkbare Vorsprünge, die sich an der Außenseite eines der beiden gegeneinander federnden Schenkel des Verbindungsstücks befinden. In dem Schenkel ist eine Stufe vorgesehen, die zwei unterschiedlich hohe Abschnitte des Schenkels voneinander trennt, wobei der höhere Abschnitt weiter vom Scheitel des Verbindungsstücks entfernt ist und jeder der beiden Abschnitte einen der beiden Vorsprünge trägt.

Problematisch bei dem bekannten Verbindungsstück ist zunächst, daß der Haken eines Wischarms mit einer solchen Position des Durchbruchs, daß in diesen Durchbruch der dem Scheitel des Verbindungsstücks nähere Vorsprung einrasten soll, nicht über die Stufe in dem Schenkel hinausreichen darf. Denn dann würde der Vorsprung nicht mehr in den Durchbruch einschnappen. Nachteilig ist ebenfalls, daß der die Vorsprünge tragende Schenkel je nach Wischarm unterschiedlich weit ausgelenkt ist. Eine optimale Anpassung der Konstruktion an eine bei einem bestimmten Wischarm vorkommende Auslenkung ist deshalb nicht möglich. Es besteht die Gefahr eines Materialbruchs oder einer zu geringen Rastkraft. Schließlich kann auch eine Lösestaste, zu der der Schenkel mit den beiden Vorsprüngen verlängert ist, nicht optimal positioniert werden, da sie je nach dem vorhandenen Wischarm zusammen mit dem Schenkel unterschiedliche Lagen einnimmt.

Aus der EP A-0 455 520 ist ein Verbindungsstück der eingangs beschriebenen Art bekannt, bei dem sich jeweils an einer Außenseite eines Schenkels ein Rastvorsprung befindet und diese beiden Rastvorsprünge unabhängig voneinander federnd auslenkbar und in Längsrichtung der Schenkel versetzt zueinander angeordnet sind. Dieses Verbindungsstück ist nur für zwei Hakenausführungen von Wischarmen anwendbar - in einem Fall befindet sich das Gegenstück zum Rastvorsprung im kurzen, freien Schenkel des Hakens und im anderen Fall im langen Schenkel des Hakens, der von der Wischstange gebildet wird. Das Verbindungsstück ist nicht beidseitig, d. h. nicht in einer um 180° um den Befestigungsbolzen des Wischblattes gedrehten Stellung mit dem Wischarm verbindbar, wodurch die Anwendbarkeit auf die zwei beschriebenen Hakenformen beschränkt bleibt.

Es ist noch zu beachten, daß die EP-A-0 455 520 erst nach dem Prioritätstag der vorliegenden Anmeldung veröffentlicht wurde und damit unter den Artikel 54 (3) EPÜ fällt. Deshalb ist diese Druckschrift für die Beurteilung der erfinderischen Tätigkeit nicht von Bedeutung.

Der Erfindung liegt die Aufgabe zugrunde, ein Verbindungsstück für einen Scheibenwischer der eingangs beschriebenen Art so weiterzuentwickeln, daß die genannten Nachteile vermieden werden können.

Erfindungsgemäß wird diese Aufgabe für ein Verbindungsstück mit den Merkmalen des Anspruchs 1 dadurch gelöst, daß sich an einem Schenkel des Verbindungsstückes zwei unabhängig voneinander federnd auslenkbare Vorsprünge, insbesondere Rastvorsprünge, befinden.

Vorteilhafte Ausgestaltungen eines erfindungsgemäßen Verbindungsstückes kann man den Unteransprüchen entnehmen. So wird es als zweckmäßig angesehen, wenn sich gemäß Anspruch 2 ein weiterer Vorsprung an der Außenseite des anderen Schenkels befindet. Eine solche Anordnung macht das Verbindungsstück noch universeller anwendbar. Sofern die Schenkel des Verbindungsstückes gegeneinander federn können, kann der weitere Vorsprung direkt auf dem anderen Schenkel sitzen.

Besonders vorteilhaft erscheint jedoch eine Ausführung gemäß Anspruch 3, nach der sich ein Vorsprung an einer federnden Zunge befindet, die längs eines Schenkels aus diesem ausgeschnitten ist. Insbesondere können sich dann die zwei Vorsprünge außen am selben Schenkel an nebeneinander liegenden längs aus dem Schenkel ausgeschnittenen und einzeln auslenkbaren federnden Zungen befinden.

Damit die nebeneinander liegenden Zungen auch im Bereich eines Vorsprungs der anderen Zunge noch eine gewissen Breite haben können, ist gemäß Anspruch 5 vorgesehen, daß die Vorsprünge schmaler als ein Durchbruch im Wischarm sind. Es hat sich gezeigt, daß auch dann noch ein ausreichend fester Sitz des Verbindungsstücks innerhalb des hakenförmigen Endes des Wischarms gewährleistet ist.

Obgleich der Vorsprung der einen Zunge gegenüber dem Vorsprung der anderen Zunge in Längsrichtung des Schenkels und der Zungen versetzt ist, ist gemäß Anspruch 6 vorgesehen, daß die beiden Zungen, in Längsrichtung des Schenkels betrachtet, ihren Fuß an derselben Stelle haben, also an derselben Stelle an den Schenkeln angebunden sind. Bei eingerastetem Vorsprung nehmen die Zungen nämlich auch dann noch jeweils dieselbe Lage ein.

Gemäß Anspruch 7 befindet sich die eine Zunge im wesentlichen auf der einen Seite und die andere Zunge im wesentlichen auf der anderen Seite einer längs des Schenkels verlaufenden Mittellinie. Außerdem sind die beiden Zungen vorzugsweise im wesentlichen gleich ausgebildet. Jedoch wird es als besonders vorteilhaft angesehen, wenn gemäß Anspruch 8 im Bereich eines Vorsprungs die Zunge mit diesem Vorsprung zu Lasten der anderen Zunge verbreitert ist. Der breitere Vorsprung kann großflächiger am Wischarm anliegen, so daß eine Beschädigung des Vorsprungs unwahrscheinlicher ist. Man kann daran denken, die eine Zunge im Bereich ihres Vorsprungs mehr zu verbreitern als die andere Zunge im Bereich ihres Vorsprungs. Dabei wären die unterschiedlichen Beanspruchungen der geschmälerten Abschnitte der jeweils anderen Zunge zu berücksichtigen. Der schmale Abschnitt der einen Zunge wird nämlich nur beim Lösen der Verrastung von Hand beansprucht. Der schmälere Abschnitt der anderen Zunge dagegen muß die vom Wischarm auf den Vorsprung ausgeübte Kraft in Längsrichtung der Zunge übertragen können und wird auch beim Lösen der Verrastung von Hand verbogen.

Verschiedene vorteilhafte Ausgestaltungen des Verbindungsstücks im Hinblick auf die Verbreiterung der Vorsprünge sind in den Ansprüchen 9 bis 12 enthalten.

Vorteilhafterweise besitzen die beiden Zungen am freien Ende Lösetasten, in deren Bereich die Zungen an den einander abgewandten Außenkanten verbreitert sind. Diese Verbreiterung ist möglich, da man die Lösetasten über die Schenkel bzw. über seitliche Führungswangen der Schenkel hinausstehenlassen kann. Wo man den Fuß der federnden Zungen in Abhängigkeit von der Lage des Vorsprungs vorteilhafterweise hinlegt, ist in den Ansprüchen 15 und 16 angegeben.

Der Anspruch 17 schließlich bezieht sich auf ein Wischblatt, auf dessen Gelenkbolzen ein erfindungsgemäßes Verbindungsstück aufgesetzt ist. Ein solches Wischblatt mit Verbindungsstück stellt die gehandelte Verkaufseinheit dar.

Ein Ausführungsbeispiel eines erfindungsgemäßen Verbindungsstücks für einen Scheibenwischer ist in den Zeichnungen dargestellt. Anhand der Figuren dieser Zeichnungen wird die Erfindung nun näher erläutert.

Es zeigen:
- Figur 1: eine Seitenansicht des Ausführungsbeispiels,
- Figur 2: im verkleinerten Maßstab eine Ansicht in Richtung des Pfeiles A aus Figur 1,
- Figur 3: im verkleinerten Maßstab eine Ansicht in Richtung des Pfeiles B aus Figur 1,
- Figur 4: einen Schnitt entlang der Linie IV-IV aus Figur 2,
- Figur 5: die Lage der drei mit Rastvorsprüngen versehenen federnden Zungen des Verbindungsstücks bei Verwendung eines ersten Wischarms,
- Figur 6: die Lage der federnden Zungen bei Verwendung eines zweiten Wischarms und
- Figur 7: die Lage der federnden Zungen bei Verwendung eines dritten Wischarms.

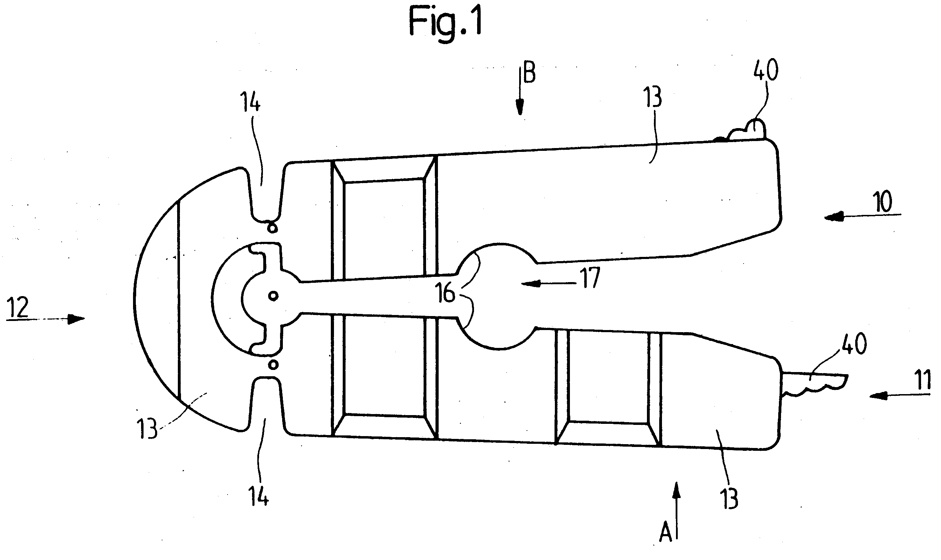

Das in den Figuren 1 bis 4 dargestellte Verbindungsstück dient in bekannter Weise zur Anlenkung eines Wischblattes an einen Wischarm mit einem hakenförmigen Ende. Das Verbindungsstück besitzt in etwa eine U-Form mit zwei Schenkeln 10 und 11, die nur im Bereich des Scheitels 12 der U-Form miteinander verbunden sind. Seitlich stehen von den Schenkeln nach außen Führungswangen 13 hoch, die auch im Bereich des Scheitels 12 umlaufen, wobei jedoch im Bereich des Übergangs zwischen einem Schenkel 10 bzw. 11 und dem Scheitel 12 eine Aussparung 14 in jede Führungswange 13 eingebracht ist, damit die Schenkel 10 und 11 aufeinander zu verschwenkt werden können, wobei sich die Drehachse der Schwenkbewegung eines Schenkels im Bereich unterhalb einer Aussparung 14 befindet. Flächen zur Anlage am Wischarm besitzen die Schenkel 10 und 11 im wesentlichen nur entlang schmaler Leisten 15, die sich unmittelbar innerhalb der Führungswangen 13 befinden und sich auch um den Scheitel 12 herumziehen. In Längsrichtung betrachtet etwa mittig besitzt jeder Schenkel 10 und 11 eine teilzylindrische Mulde 16, die jeweils zum anderen Schenkel hin offen ist. Beide Mulden 16 bilden zusammen eine Aufnahme 17 für einen zwischen zwei Seitenwangen eines Wischblatts fixierten Gelenkbolzen. Die Mulde 16 im Schenkel 11 erstreckt sich nur über einen Teil ihres Umfangs über die gesamte Breite des Verbindungsstücks. Im anderen Teil reicht sie jeweils von den Außenseiten der Führungswangen 13 bis zu den Innenseiten der Leisten 15. Die Mulde 16 des Schenkels 10 ist nirgendwo durchgehend gestaltet, sondern erstreckt sich jeweils von den Außenseiten der Führungswangen 13 bis zur Innenseite einer sich nach innen an eine Leiste 15 anschließenden weiteren und gegen die Leiste 15 abgesetzten Leiste 18, die etwa dieselbe Breite wie die Leiste 15 hat.

Aus dem Schenkel 10 ist in Längsrichtung mittig eine federnde Zunge 25 ausgeschnitten, deren Breite etwas geringer ist als der Abstand zwischen den Innenseiten der Leisten 18 und die im Bereich der Mulde 16 in Form einer Rastnase einen Vorsprung 26 trägt, die von der dem Schenke 11 abgewandten Seite der Zunge 25 hochsteht. Der Vorsprung 26 erstreckt sich über die gesamte Breite der Zunge 25 und fällt zum Scheitel 12 des Verbindungsstücks hin schräg ab. Die dem Scheitel abgewandte Stirnfläche 27 steht senkrecht auf der Zunge 25 und ist von einer Seitenkante der Zunge zur anderen zylindrisch gekrümmt. Diese Krümmung entspricht der Krümmung einer Anlagefläche im Durchbruch eines Wischarms, in den der Vorsprung 26 eingreifen soll. Die Zunge 25 kann unabhängig von den übrigen Teilen des Schenkels 10 ausgelenkt werden. Ihr Fuß, d. h. ihr festes Ende, befindet sich im Bereich zwischen der Achse 28 des Scheitels 12 und der Achse 29 der Aufnahme 17, wobei der Abstand des Fußes 30 von der Achse 29 wesentlich größer als von der Achse 28 ist. Die Zunge ist über den Vorsprung 26 hinaus zunächst geradlinig verlängert, um im Abstand zum Vorsprung 26 und im Bereich des freien Endes des Schenkels 10 nach außen zu einer Lösetaste 31 abzuknicken, die an ihrer Außenseite mit einer Riffelung versehen ist. Unterhalb der Rastnase 26 besitzt die Zunge 25 eine Kuhle 32, damit der Gelenkbolzen des Wischblatts während der Montage des Wischblatts am Wischarm bzw. während und nach der Montage die Auslenkung der Zunge 25 nicht behindert oder unmöglich macht.

Aus dem Schenke 11 sind in Längsrichtung zwei federnde Zungen 35 und 36 ausgeschnitten, die an ihren Außenkanten jeweils einen Abstand von den Leisten 15 haben und von denen sich die eine im wesentlichen auf der einen Seite und die andere im wesentlichen auf der anderen Seite einer längs des Schenkels 11 verlaufenden Mittellinie 37 erstreckt. Jede der beiden Zungen 35 und 36 besitzt in Form einer Rastnase einen Vorsprung 38 bzw. 39, die in Längsrichtung des Schenkels 11 und der Federn 35 und 36 etwa um eine Länge eines Vorsprungs gegeneinander versetzt sind und die auch im Vergleich zum Vorsprung 26 an der federnden Zunge 25 in Längsrichtung der Schenkel 10 und 11 jeweils eine andere Position einnehmen. Dabei liegen beide Vorsprünge 38 und 39, vom festen Ende des Schenkels 11 betrachtet, jenseits der Aufnahme 17, wobei der Abstand des Vorsprungs 38 der Zunge 35 von der Aufnahme geringer ist als der Abstand des Vorsprungs 39 der Zunge 36. Trotz des Versatzes der Vorsprünge 38 und 39 zueinander entspringen die beiden Zungen 35 und 36, in Längsrichtung des Schenkels 11 betrachtet, an derselben Stelle und haben ihren Fuß 30 etwa in der Mitte der Mulde 16. Auch die Zungen 35 und 36 sind über die Vorsprünge 38 und 39 hinaus verlängert und stehen mit einer Lösetaste 40, in deren Bereich sie an der Außenkante 41 verbreitert sind, über die Führungswangen 13 hinaus vor. Auch die Lösetasten 40 sind an ihrer Außenseite mit einer Riffelung versehen.

Auch die beiden Zungen 35 und 36 sind, abgesehen von durch den Versatz der Vorsprünge 38 und 39 bedingten Unterschieden, im wesentlichen gleich ausgebildet. Im Bereich der Vorsprünge 38 bzw. 39 ist jede Zunge 35 bzw. 36 zur anderen Zunge hin auf Kosten dieser anderen Zunge verbreitert, so daß auch die Vorsprünge, die aufgrund der Lage des Durchbruchs im Wischarm einen Abstand von der jeweiligen Außenkante 41 haben, breiter gemacht werden konnten, als dies bei einer absoluten Beschränkung einer Zunge auf die eine Seite der Mittellinie 37 der Fall gewesen wäre. Die Vorsprünge 38 und 39 erstrecken sich also in der Breite bis jeweils auf die andere Seite der Mittellinie 37, enden jedoch schon vor der der Außenkante 41 benachbarten Außenseite des jeweils anderen Vorsprungs. Sie enden sogar so weit vor dieser Außenseite des anderen Vorsprungs, daß eine Zunge 38 bzw. 39 im Bereich des Vorsprungs der anderen Zunge noch breiter ist als der Abstand ihres eigenen Vorsprungs von der Außenkante 41. Trotz dieser Verbreiterung sind die Vorsprünge 38 und 39 noch schmaler als der Durchbruch in einem Wischarm, in den sie eingreifen sollen und dessen Breite dem Abstand der beiden Außenseiten der Vorsprünge 38 und 39 voneinander entspricht. Es hat sich jedoch gezeigt, daß die Vorsprünge 38 und 39 mit der beim Ausführungsbeispiel vorgesehenen Breite das Verbindungsstück und damit auch ein Wischblatt sicher in dem hakenförmigen Ende eines Wischarms halten können. Wichtig ist vor allem, daß die Vorsprünge 38 und 39 im Bereich ihrer senkrecht auf die Zungen 35 und 36 abfallenden Stirnfläche 27 eine bestimmte Breite haben. Um insbesondere den Vorsprung 39 jedoch auch im Bereich seines schrägen Abfalls soweit wie möglich mit der Breite an der Stirnfläche 27 auszustatten, schließt sich der verbreiterte Abschnitt 42 der Zunge 35 unmittelbar an den durch die Verbreiterung des Vorsprungs 38 verursachten schmäleren Abschnitt 43 der Zunge 36 an. Umgekehrt ist es bei der Zunge 35, bei der sich der schmälere Abschnitt 43 unmittelbar an den breiteren Abschnitt 42 anschließt. Dieses unmittelbare Anschließen zeigt sich insbesondere darin, daß der Schlitz 44 zwischen den beiden Zungen 35 und 36, der vor dem Vorsprung 38 und nach dem Vorsprung 39 mittig des Schenkels 11, im Bereich des Vorsprungs 38 jedoch ganz auf der einen Seite und im Bereich des Vorsprungs 39 ganz auf der anderen Seite der Mittellinie 37 verläuft, von der einen Seite der Mittellinie zur anderen Seite der Mittellinie wechselt, ohne dazwischen noch einen Abschnitt zu haben, der wieder mittig liegt.

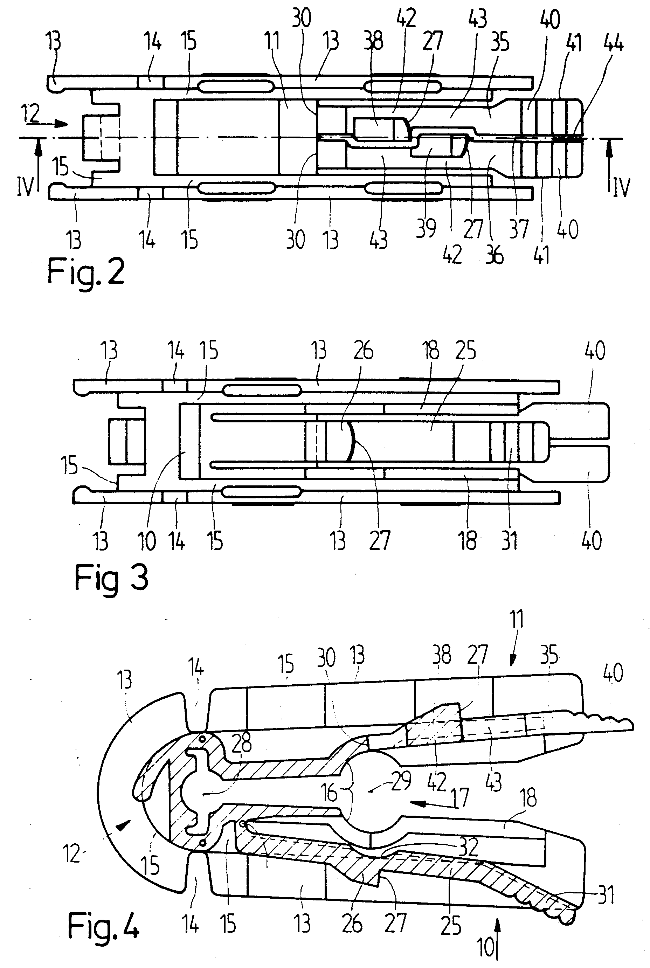

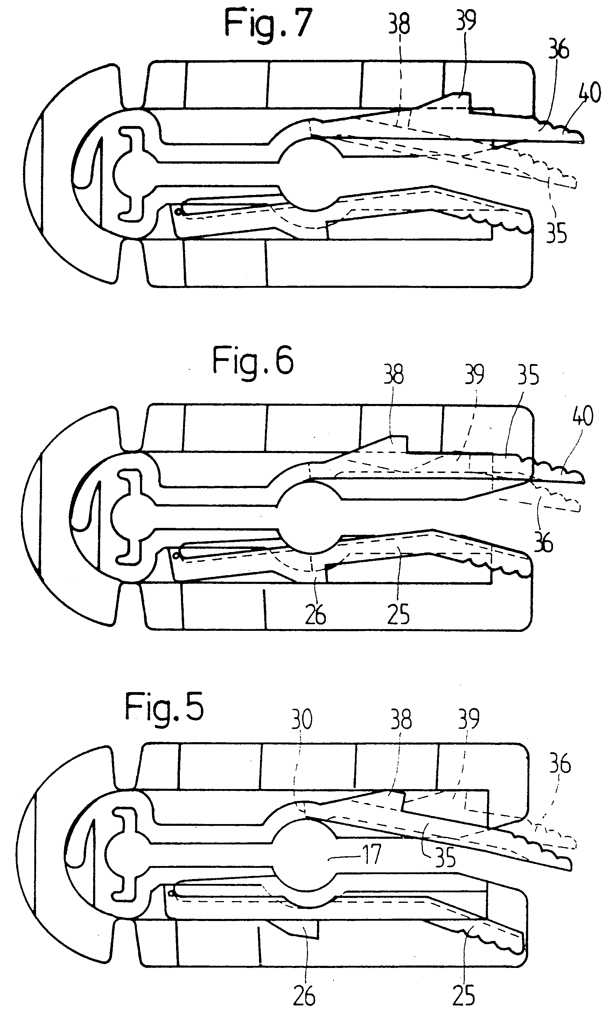

In der Einbaulage nach Figur 5 ist das Verbindungsstück mit einem Wischarm verwendet, in dessen Durchbruch der Vorsprung 26 der federnden Zunge 25 eingreift. Die Zunge 25 ist im Vergleich zu der Position nach Figur 4 bezüglich der Leisten 15 des Schenkels 10 soweit nach innen gedrückt, daß ihre Außenseite mit den Anlageflächen der Leisten 15 fluchtet. Zusammen mit allen anderen Teilen des Schenkels 10 ist die federnde Zunge 25 schließlich noch bezüglich des anderen Schenkels 11 soweit verschwenkt, daß die beiden Schenke 10 und 11 im wesentlichen parallel entsprechend den beiden Schenkeln des hakenförmigen Endes des Wischarms verlaufen. Für die beiden Vorsprünge 38 und 39 der federnden Zungen 35 und 36 sind im Wischarm keine Durchbrüche vorhanden. Die Vorsprünge 38 und 39 stützen sich deshalb am Wischarm ab, wobei die federnden Zungen 35 und 36 aufgrund der unterschiedlichen Abstände der Vorsprünge 38 und 39 von den Füßen 30 der Zungen unterschiedlich weit ausgelenkt sind.

In der Einbaulage nach Figur 6 greift der Vorsprung 38 der federnden Zunge 35 in einen Durchbruch eines Wischarms ein. Dementsprechend fluchtet die Außenseite der federnden Zunge 35 mit den Anlageflächen der Leisten 15 des Schenkels 11. Der Vorsprung 26 der federnden Zunge 25 und der Vorsprung 39 der federnden Zunge 36 liegen am Wischarm an, so daß die federnden Zungen 35 und 36 nach innen gedrückt sind. In der Einbaulage nach Figur 7 schließlich hat die federnde Zunge 25 dieselbe Lage wie in der nach Figur 6. In einen Wischarm greift nun der Vorsprung 39 der federnden Zunge 36, während die federnde Zunge 35 weit nach innen in dieselbe Position wie in der Einbaulage nach Figur 5 gedrückt ist. Um den Eingriff des Vorsprungs 38 oder des Vorsprungs 39 zu lösen, wird auf die Lösetaste 40 der jeweiligen federnden Zunge gedrückt. Aus einem Vergleich der beiden Figuren 6 und 7 geht hervor, daß sich die jeweilige Lösetaste jeweils in derselben Position befindet.

In den drei Einbaulagen nach den Figuren 5 bis 7 befindet sich die Zunge 25 jeweils unten, d. h. näher an der zu reinigenden Scheibe als die Zungen 35 und 36. Selbstverständlich kann es auch so sein, daß sich die mit einem Vorsprung in den Wischarm eingreifende Zunge, sei es nun die Zunge 25, 35 oder 36, jeweils unten befindet. Die Figuren 5 bis 7 sollen nur jeweils die Lage der Zungen verdeutlichen.

### Beschreibung für folgenden Vertragsstaat : SE

Die Erfindung geht aus von einem Verbindungsstück für einen Scheibenwischer, das zur Anlenkung eines Wischblatts an einen mit einem hakenförmigen Ende versehenen Wischarm vorgesehen ist und das die Merkmale aus dem Oberbegriff des Anspruch 1 aufweist (Verbindungstück, das jenem nach der EP-A-0 329 515 gattungsgemäß ausgebildet ist).

Verbindungsstücke zum Anlenken eines Wischblatts an das hakenförmige Ende eines Wischarms sind heute meist aus Kunststoff hergestellt und besitzen im wesentlichen eine U-Form mit zwei in der Betriebsposition sich in Längsrichtung des Wischblatts erstreckenden Schenkein, die zwischen sich eine Aufnahme für einen Gelenkbolzen des Wischblatts bilden und vom hakenförmigen Ende des Wischarms umgreifbar sind. In dem einen oder in dem anderen Schenkel des hakenförmigen indes des Wischarms befindet sich ein Durchbruch, in den nach ordnungsgemäßer Montage eines Wischblatts am Wischarm ein federnd auslenkbarer Vorsprung des Verbindungsstücks, der üblicherweise als Rastnase ausgebildet ist, eingreift und so verhindert, daß das Verbindungsstück aus dem hakenförmigen Ende des Wischarms herausrutscht. Der Vorsprung kann sich, sofern die Schenkel insgesamt gegeneinander federnd sind, direkt an einem Schenke oder auch an einer aus einem Schenkel längs ausgeschnittenen federnden Zunge befinden. Ein Verbindungsstück mit nur einem federnd auslenkbaren Vorsprung ist aus der DE-A-32 22 761 bekannt.

Es gibt Wischarme mit unterschiedlichen Enden auf dem Markt. Da Fahrzeuge mit unterschiedlichen Wischarmen oft mit gleichen Wischblättern ausgestattet sind, kann man zwar im Ersatzteilhandel des gleiche Wischblatt für verschiedene Fahrzeugfabrikate und verschiedene Typen des gleichen Fabrikats anbieten, muß jedoch der Verkaufspackung unterschiedliche Verbindungsstücke beilegen, von denen nur eines verwendet wird, um das Wischblatt an einem bestimmten Wischarm zu befestigen. Alle anderen beigelegten Verbindungsstücke werden fortgeworfen. Um die Kosten für diese Verbindungsstücke einzusparen und um dem Käufer den Austausch eines Wischblatts zu erleichtern, ist man bestrebt, ein Verbindungsstück so auszulegen, daß es zum An lenken eines Wischblatts an verschiedenartige Wischarme geeignet ist.

Aus der DE-A-28 29 437 ist ein solches Verbindungsstück bekannt. Aus einem Schenkel dieses Verbindungsstücks ist längs eine federnde Zunge ausgeschnitten, auf der zwei in Längsrichtung der Schenkel gegeneinander versetzte Vorsprünge in Form von Rastnasen einstückig angebracht sind. Die eine Rastnase befindet sich an der Außenseite der Zunge, die dem anderen Schenkel abgekehrt ist, und die andere Rastnase befindet sich an der Innenseite der Zunge, die dem anderen Schenkel zugekehrt ist. Die Rastnase an der Außenseite ist dafür vorgesehen, in einen Durchbruch einzugreifen, der sich in dem hakenförmigen und die Schenkel des Verbindungsstücks umgreifenden Ende eines Wischarms befindet. Die Rastnase an der Innenseite soll in den Durchbruch eines Wischarms mit einem geraden Ende eingreifen, das zwischen den Schenkeln in das Verbindungsstück hineingeschoben wird. Mit dem geschilderten Verbindungsstück kann also das Wischblatt sowohl mit einem Wischarm mit einem hakenförmigen als auch mit einem Wischarm mit einem geraden Ende verbunden werden.

Auf dem Markt befindliche Wischarme unterscheiden sich nicht nur darin, daß die einen ein hakenförmiges, die anderen ein gerades Ende haben. Unterschiede bestehen auch innerhalb der Gruppe von Wischarmen mit hakenförmigen Enden, wobei vor allem die Länge des Hakens und die Lage des Durchbruchs bezüglich des Scheitels des Hakens voneinander differieren. Aus der EP-A-0 329 515 ist ein Verbindungsstück bekannt, mit dem ein Wischblatt an Wischarme angelenkt werden kann, die sich in ihrem hakenförmigen Ende unterscheiden, und von dem im Oberbegriff des Anspruchs 1 ausgegangen wird.

Auch dieses Verbindungsstück besitzt zwei in Längsrichtung der Schenkel gegeneinander versetzte, federnd auslenkbare Vorsprünge, die sich an der Außenseite eines der beiden gegeneinander federnden Schenkel des Verbindungsstücks befinden. In dem Schenkel ist eine Stufe vorgesehen, die zwei unterschiedlich hohe Abschnitte des Schenkels voneinander trennt, wobei der höhere Abschnitt weiter vom Scheitel des Verbindungsstücks entfernt ist und jeder der beiden Abschnitte einen der beiden Vorsprünge trägt. Problematisch bei dem bekannten Verbindungsstück ist zunächst, daß der Haken eines Wischarms mit einer solchen Position des Durchbruchs, daß in diesen Durchbruch der dem Scheitel des Verbindungsstücks nähere Vorsprung einrasten soll, nicht über die Stufe in dem Schenkel hinausreichen darf. Denn dann würde der Vorsprung nicht mehr in den Durchbruch einschnappen. Nachteilig ist ebenfalls, daß der die Vorsprünge tragende Schenkel je nach Wischarm unterschiedlich weit ausgelenkt ist. Eine optimale Anpassung der Konstruktion an eine bei einem bestimmten Wischarm vorkommende Auslenkung ist deshalb nicht möglich. Es besteht die Gefahr eines Materialbruchs oder einer zu geringen Rastkraft. Schließlich kann auch eine Lösetaste, zu der der Schenkel mit den beiden Vorsprüngen verlängert ist, nicht optimal positioniert werden, da sie je nach dem vorhandenen Wischarm zusammen mit dem Schenkel unterschiedliche Lagen einnimmt.

Der Erfindung liegt die Aufgabe zugrunde, ein Verbindungsstück für einen Scheibenwischer, das die Merkmale aus dem Oberbegriff des Anspruchs 1 aufweist, so weiterzuentwickeln, daß die genannten Nachteile vermieden werden können.

Erfindungsgemäß wird diese Aufgabe für ein Verbindungsstück mit den Merkmalen aus dem Oberbegriff des Anspruchs 1 dadurch gelöst, daß die beiden Vorsprünge unabhängig voneinander federnd auslenkbar sind.

Ein Verbindungsstück mit zwei federnd auslenkbaren Vorsprüngen, die unabhängig voneinander federnd auslenkbar sind, ist an sich schon aus der DE-A-38 42 955 bekannt. Der eine dieser beiden Vorsprünge befindet sich an einer federnden Zunge, die aus dem einen Schenkel des Verbindungsstücks ausgeschnitten ist, und der andere Vorsprung befindet sich an einer federnden Zunge, die aus dem anderen Schenkel des Verbindungsstücks ausgeschnitten ist. Im Gegensatz zu dem erfindungsgemäßen Verbindungsstück sind die beiden Vorsprünge jedoch nicht in Längsrichtung der Schenkel gegeneinander versetzt. Man hat sie bei dem bekannten Verbindungsstück nämlich nicht deshalb vorgesehen, um mit dem Verbindungsstück das gleiche Wischblatt an unterschiedliche Wischarme anlenken zu können. Den zwei Vorsprüngen liegt vielmehr die Überlegung zugrunde, das Verbindungsstück bezüglich einer zwischen den beiden Schenkeln verlaufenden Längsmittelebene spiegelbildlich auszugestalten, damit man bei seiner Montage am Wischblatt nicht auf eine bestimmte Vorzugslage achten muß.

Vorteilhafte Ausgestaltungen eines erfindungsgemäßen Verbindungsstücks kann man den Unteransprüchen entnehmen. So wird es als zweckmäßig angesehen, wenn sich gemäß Anspruch 2 einer von zwei Vorsprüngen an der Außenseite des einen Schenkels und der andere von zwei Vorsprüngen an der Außenseite des anderen Schenkels befindet. Eine solche Anordnung erscheint insbesondere dann besonders vorteilhaft, wenn nur zwei Vorsprünge vorhanden sind. Sofern die Schenkel des Verbindungsstücks gegeneinander federn können, können die beiden Vorsprünge direkt auf den Schenkeln sitzen.

Besonders vorteilhaft erscheint jedoch eine Ausführung gemäß Anspruch 3, nach der sich ein Vorsprung an einer federnden Zunge befindet, die längs eines Schenkels aus diesem ausgeschnitten ist. Insbesondere können sich dann zwei Vorsprünge außen am selben Schenkel und an nebeneinander liegenden längs aus dem Schenkel ausgeschnittenen und einzeln auslenkbaren federnden Zungen befinden.

Damit die nebeneinander liegenden Zungen auch im Bereich eines Vorsprungs der anderen Zunge noch eine gewissen Breite haben können, ist gemäß Anspruch 5 vorgesehen, daß die Vorsprünge schmaler als ein Durchbruch im Wischarm sind. Es hat sich gezeigt, daß auch dann noch ein ausreichend fester Sitz des Verbindungsstücks innerhalb des hakenförmigen Endes des Wischarms gewährleistet ist.

Obgleich der Vorsprung der einen junge gegenüber dem Vorsprung der anderen Zunge in Längsrichtung des Schenkels und der Zungen versetzt ist, ist gemäß Anspruch 6 vorgesehen, daß die beiden Zungen, in Längsrichtung des Schenkels betrachtet, ihren Fuß an derselben Stelle haben, also an derselben Stelle an den Schenkeln angebunden sind. Bei eingerastetem Vorsprung nehmen die Zungen nämlich auch dann noch jeweils dieselbe Lage ein.

Gemäß Anspruch 7 befindet sich die eine Zunge im wesentlichen auf der einen Seite unin die andere Zunge im wesentlichen auf der anderen Seite einer längs des Schenkels verlaufenden Mittellinie. Außerdem sind die beiden Zungen vorzugsweise im wesentlichen gleich ausgebildet. Jedoch wird es als besonders vorteilhaft angesehen, wenn gemäß Anspruch 8 im Bereich eines Vorsprungs die Zunge mit diesem Vorsprung zu Lasten der anderen Zunge verbreitert ist. Der breitere Vorsprung kann großflächiger am Wischarm an liegen, so daß eine Beschädigung des Vorsprungs unwahrscheinlicher ist. Man kann daran denken, die eine Zunge im Bereich ihres Vorsprungs mehr zu verbreitern als die andere Zunge im Bereich ihres Vorsprungs. Dabei wären die unterschiedlichen Beanspruchungen der geschmälerten Abschnitte der jeweils anderen Zunge zu berücksichtigen. Der schmale Abschnitt der einen Zunge wird nämlich nur beim Lösen der Verrastung von Hand beansprucht. Der schmälere Abschnitt der anderen Zunge dagegen muß die vom Wischarm auf den Vorsprung ausgeübte Kraft in Längsrichtung der Zunge übertragen können und wird auch beim Lösen der Verrastung von Hand verbogen.

Verschiedene vorteilhafte Ausgestaltungen des Verbindungsstücks im Hinblick auf die Verbreiterung der Vorsprünge sind in den Ansprüchen 9 bis 12 enthalten.

Vorteilhafterweise besitzen die beiden Zungen am freien Ende Lösetasten, in deren Bereich die Zungen an den einander abgewandten Außenkanten verbreitert sind. Diese Verbreiterung ist möglich, da man die Lösetasten über die Schenkel bzw. über seitliche Führungswangen der Schenkel hinausstehenlassen kann. Wo man den Fuß der federnden Zungen in Abhängigkeit von der Lage des Vorsprungs vorteilhafterweise hinlegt, ist in den Ansprüchen 15 und 16 angegeben.

Der Anspruch 17 schließlich bezieht sich auf ein Wischblatt, auf dessen Gelenkbolzen ein erfindungsgemäßes Verbindungsstück aufgesetzt ist. Ein solches Wischblatt mit Verbindungsstück stellt die gehandelte Verkaufseinheit dar.

Ein Ausführungsbeispiel eines erfindungsgemäßen Verbindungsstücks für einen Scheibenwischer ist in den Zeichnungen dargestellt. Anhand der Figuren dieser Zeichnungen wird die Erfindung nun näher erläutert.

Es zeigen:
- Figur 1: eine Seitenansicht des Ausführungsbeispiels,
- Figur 2: im verkleinerten Maßstab eine Ansicht in Richtung des Pfeiles A aus Figur 1,
- Figur 3: im verkleinerten Maßstab eine Ansicht in Richtung des Pfeiles B aus Figur 1,
- Figur 4: einen Schnitt entlang der Linie IV-IV aus Figur 2,
- Figur 5: die Lage der drei mit Rastvorsprüngen versehenen federnden Zungen des Verbindungsstücks bei Verwendung eines ersten Wischarms,
- Figur 6: die Lage der federnden Zungen bei Verwendung eines zweiten Wischarms und
- Figur 7: die Lage der federnden Zungen bei Verwendung eines dritten Wischarms.

Das in den Figuren 1 bis 4 dargestellte Verbindungsstück dient in bekannter Weise zur Anlenkung eines Wischblattes an einen Wischarm mit einem hakenförmigen Ende. Das Verbindungsstück besitzt in etwa eine U-Form mit zwei Schenkeln 10 und 11, die nur im Bereich des Scheitels 12 der U-Form miteinander verbunden sind. Seitlich stehen von den Schenkeln nach außen Führungswangen 13 hoch, die auch im Bereich des Scheitels 12 umlaufen, wobei jedoch im Bereich des Übergangs zwischen einem Schenkel 10 bzw. 11 und dem Scheitel 12 eine Aussparung 14 in jede Führungswange 13 eingebracht ist, damit die Schenkel 10 und 11 aufeinander zu verschwenkt werden können, wobei sich die Drehachse der Schwenkbewegung eines Schenkels im Bereich unterhalb einer Aussparung 14 befindet. Flächen zur Anlage am Wischarm besitzen die Schenkel 10 und 11 im wesentlichen nur entlang schmaler Leisten 15, die sich unmittelbar innerhalb der Führungswangen 13 befinden und sich auch um den Scheitel 12 herumziehen. In Längsrichtung betrachtet etwa mittig besitzt jeder Schenkel 10 und 11 eine teilzylindrische Mulde 16, die jeweils zum anderen Schenkel hin offen ist. Beide Mulden 16 bilden zusammen eine Aufnahme 17 für einen zwischen zwei Seitenwangen eines Wischblatts fixierten Gelenkbolzen. Die Mulde 16 im Schenkel 11 erstreckt sich nur über einen Teil ihres Umfangs über die gesamte Breite des Verbindungsstücks. Im anderen Teil reicht sie jeweils von den Außenseiten der Führungswangen 13 bis zu den Innenseiten der Leisten 15. Die Mulde 16 des Schenkels 10 ist nirgendwo durchgehend gestaltet, sondern erstreckt sich jeweils von den Außenseiten der Führungswangen 13 bis zur Innenseite einer sich nach innen an eine Leiste 15 anschließenden weiteren und gegen die Leiste 15 abgesetzten Leiste 18, die etwa dieselbe Breite wie die Leiste 15 hat.

Aus dem Schenkel 10 ist in Längsrichtung mittig eine federnde Zunge 25 ausgeschnitten, deren Breite etwas geringer ist als der Abstand zwischen den Innenseiten der Leisten 18 und die im Bereich der Mulde 16 in Form einer Rastnase einen Vorsprung 26 trägt, die von der dem Schenkel 11 abgewandten Seite der Zunge 25 hochsteht. Der Vorsprung 26 erstreckt sich über die gesamte Breite der Zunge 25 und fällt zum Scheitel 12 des Verbindungsstücks hin schräg ab. Die dem Scheitel abgewandte Stirnfläche 27 steht senkrecht auf der Zunge 25 und ist von einer Seitenkante der Zunge zur anderen zylindrisch gekrümmt. Diese Krümmung entspricht der Krümmung einer Anlagefläche im Durchbruch eines Wischarms, in den der Vorsprung 26 eingreifen soll. Die Zunge 25 kann unabhängig von den übrigen Teilen des Schenkels 10 ausgelenkt werden. Ihr Fuß, d. h. ihr festes Ende, befindet sich im Bereich zwischen der Achse 28 des Scheitels 12 und der Achse 29 der Aufnahme 17, wobei der Abstand des Fußes 30 von der Achse 29 wesentlich größer als von der Achse 28 ist. Die Zunge ist über den Vorsprung 26 hinaus zunächst geradlinig verlängert, um im Abstand zum Vorsprung 26 und im Bereich des freien Endes des Schenkels 10 nach außen zu einer Lösetaste 31 abzuknicken, die an ihrer Außenseite mit einer Riffelung versehen ist. Unterhalb der Rastnase 26 besitzt die Zunge 25 eine Kuhle 32, damit der Gelenkbolzen des Wischblatts während der Montage des Wischblatts am Wischarm bzw. während und nach der Montage die Auslenkung der Zunge 25 nicht behindert oder unmöglich macht.

Aus dem Schenkel 11 sind in Längsrichtung zwei federnde Zungen 35 und 36 ausgeschnitten, die an ihren Außenkanten jeweils einen Abstand von den Leisten 15 haben und von denen sich die eine im wesentlichen auf der einen Seite und die andere im wesentlichen auf der anderen Seite einer längs des Schenkels 11 verlaufenden Mittellinie 37 erstreckt. Jede der beiden Zungen 35 und 36 besitzt in Form einer Rastnase einen Vorsprung 38 bzw. 39, die in Längsrichtung des Schenkels 11 und der Federn 35 und 36 etwa um eine Länge eines Vorsprungs gegeneinander versetzt sind und die auch im Vergleich zum Vorsprung 26 an der federnden Zunge 25 in Längsrichtung der Schenkel 10 und 11 jeweils eine andere Position einnehmen. Dabei liegen beide Vorsprünge 38 und 39, vom festen Ende des Schenkels 11 betrachtet, jenseits der Aufnahme 17, wobei der Abstand des Vorsprungs 38 der Zunge 35 von der Aufnahme geringer ist als der Abstand des Vorsprungs 39 der Zunge 36. Trotz des Versatzes der Vorsprünge 38 und 39 zueinander entspringen die beiden Zungen 35 und 36, in Längsrichtung des Schenkels 11 betrachtet, an derselben Stelle und haben ihren Fuß 30 etwa in der Mitte der Mulde 16. Auch die Zungen 35 und 36 sind über die Vorsprünge 38 und 39 hinaus verlängert und stehen mit einer Lösetaste 40, in deren Bereich sie an der Außenkante 41 verbreitert sind, über die Führungswangen 13 hinaus vor. Auch die Lösetasten 40 sind an ihrer Außenseite mit einer Riffelung versehen.

Auch die beiden Zungen 35 und 36 sind, abgesehen von durch den Versatz der Vorsprünge 38 und 39 bedingten Unterschieden, im wesentlichen gleich ausgebildet. Im Bereich der Vorsprünge 38 bzw. 39 ist jede Zunge 35 bzw. 36 zur anderen Zunge hin auf Kosten dieser anderen Zunge verbreitert, so daß auch die Vorsprünge, die aufgrund der Lage des Durchbruchs im Wischarm einen Abstand von der jeweiligen Außenkante 41 haben, breiter gemacht werden konnten, als dies bei einer absoluten Beschränkung einer Zunge auf die eine Seite der Mittellinie 37 der Fall gewesen wäre. Die Vorsprünge 38 und 39 erstrecken sich also in der Breite bis jeweils auf die andere Seite der Mittellinie 37, enden jedoch schon vor der der Außenkante 41 benachbarten Außenseite des jeweils anderen Vorsprungs. Sie enden sogar so weit vor dieser Außenseite des anderen Vorsprungs, daß eine Zunge 38 bzw. 39 im Bereich des Vorsprungs der anderen Zunge noch breiter ist als der Abstand ihres eigenen Vorsprungs von der Außenkante 41. Trotz dieser Verbreiterung sind die Vorsprünge 38 und 39 noch schmaler als der Durchbruch in einem Wischarm, in den sie eingreifen sollen und dessen Breite dem Abstand der beiden Außenseiten der Vorsprünge 38 und 39 voneinander entspricht. Es hat sich jedoch gezeigt, daß die Vorsprünge 38 und 39 mit der beim Ausführungsbeispiel vorgesehenen Breite das Verbindungsstück und damit auch ein Wischblatt sicher in dem hakenförmigen Ende eines Wischarms halten können. Wichtig ist vor allem, daß die Vorsprünge 38 und 39 im Bereich ihrer senkrecht auf die Zungen 35 und 36 abfallenden Stirnfläche 27 eine bestimmte Breite haben. Um insbesondere den Vorsprung 39 jedoch auch im Bereich seines schrägen Abfalls soweit wie möglich mit der Breite an der Stirnfläche 27 auszustatten, schließt sich der verbreiterte Abschnitt 42 der Zunge 35 unmittelbar an den durch die Verbreiterung des Vorsprungs 38 verursachten schmäleren Abschnitt 43 der Zunge 36 an. Umgekehrt ist es bei der Zunge 35, bei der sich der schmälere Abschnitt 43 unmittelbar an den breiteren Abschnitt 42 anschließt. Dieses unmittelbare Anschließen zeigt sich insbesondere darin, daß der Schlitz 44 zwischen den beiden Zungen 35 und 36, der vor dem Vorsprung 38 und nach dem Vorsprung 39 mittig des Schenkels 11, im Bereich des Vorsprungs 38 jedoch ganz auf der einen Seite und im Bereich des Vorsprungs 39 ganz auf der anderen Seite der Mittellinie 37 verläuft, von der einen Seite der Mittellinie zur anderen Seite der Mittellinie wechselt, ohne dazwischen noch einen Abschnitt zu haben, der wieder mittig liegt.

In der Einbaulage nach Figur 5 ist das Verbindungsstück mit einem Wischarm verwendet, in dessen Durchbruch der Vorsprung 26 der federnden Zunge 25 eingreift. Die Zunge 25 ist im Vergleich zu der Position nach Figur 4 bezüglich der Leisten 15 des Schenkels 10 soweit nach innen gedrückt, daß ihre Außenseite mit den Anlageflächen der Leisten 15 fluchtet. Zusammen mit allen anderen Teilen des Schenkels 10 ist die federnde Zunge 25 schließlich noch bezüglich des anderen Schenkels 11 soweit verschwenkt, daß die beiden Schenkel 10 und 11 im wesentlichen parallel entsprechend den beiden Schenkeln des hakenförmigen Endes des Wischarms verlaufen. Für die beiden Vorsprünge 38 und 39 der federnden Zungen 35 und 36 sind im Wischarm keine Durchbrüche vorhanden. Die Vorsprünge 38 und 39 stützen sich deshalb am Wischarm ab, wobei die federnden Zungen 35 und 36 aufgrund der unterschiedlichen Abstände der Vorsprünge 38 und 39 von den Füßen 30 der Zungen unterschiedlich weit ausgelenkt sind.

In der Einbaulage nach Figur 6 greift der Vorsprung 38 der federnden Zunge 35 in einen Durchbruch eines Wischarms ein. Dementsprechend fluchtet die Außenseite der federnden Zunge 35 mit den Anlageflächen der Leisten 15 des Schenkels 11. Der Vorsprung 26 der federnden Zunge 25 und der Vorsprung 39 der federnden Zunge 36 liegen am Wischarm an, so daß die federnden Zungen 35 und 36 nach innen gedrückt sind. In der Einbaulage nach Figur 7 schließlich hat die federnde Zunge 25 dieselbe Lage wie in der nach Figur 6. In einen Wischarm greift nun der Vorsprung 39 der federnden Zunge 36, während die federnde Zunge 35 weit nach innen in dieselbe Position wie in der Einbaulage nach Figur 5 gedrückt ist. Um den Eingriff des Vorsprungs 38 oder des Vorsprungs 39 zu lösen, wird auf die Lösetaste 40 der jeweiligen federnden Zunge gedrückt. Aus einem Vergleich der beiden Figuren 6 und 7 geht hervor, daß sich die jeweilige Lösetaste jeweils in derselben Position befindet.

In den drei Einbaulagen nach den Figuren 5 bis 7 befindet sich die Zunge 25 jeweils unten, d. h. näher an der zu reinigenden Scheibe als die Zungen 35 und 36. Selbstverständlich kann es auch so sein, daß sich die mit einem Vorsprung in den Wischarm eingreifende Zunge, sei es nun die Zunge 25, 35 oder 36, jeweils unten befindet. Die Figuren 5 bis 7 sollen nur jeweils die Lage der Zungen verdeutlichen.

## Patentansprüche (Patentansprüche für folgende(n) Vertragsstaat(en): ES, FR, GB, IT)

1. Verbindungsstück für einen Scheibenwischer zur Anlenkung eines Wischblatts an einen mit einem hakenförmigen Ende versehenen Wischarm, das im wesentlichen eine U-Form mit zwei Schenkein (10, 11) aufweist, die zwischen sich eine Aufnahme (17) für einen Gelenkbolzen des Wischblatts bilden und vom hakenförmigen Ende des Wischarms umgreifbar sind, und das zwei in Längsrichtung der Schenkel (10,11) gegeneinander versetzte und sich an der Außenseite einer der beiden Schenkel (10,11) befindliche, unabhängig voneinander federnd auslenkbare Vorsprünge (38,39), insbesondere Rastvorsprünge, zum Eingriff in einen Durchbruch oder Rücksprung des Wischarms besitzt.

2. Verbindungsstück nach Anspruch 1, dadurch **gekennzeichnet**, daß sich ein weiterer Vorsprung (26) an der Außenseite des anderen Schenkels (10) befindet.

3. Verbindungsstück nach Anspruch 1 oder 2, dadurch **gekennzeichnet**, daß sich ein Vorsprung (26, 38, 39) an einer federnden Zunge (25, 35, 36) befindet, die längs eines Schenkels (10, 11) aus diesem ausgeschnitten ist.

4. Verbindungsstück nach enem der Ansprüche 1 bis 3, dadurch **gekennzeichnet**, daß sich die zwei Vorsprünge (38, 39) außen am selben Schenkel (11) an nebeneinanderliegenden längs aus dem Schenkel (11) ausgeschnittenen und einzeln auslenkbaren federnden Zungen (35, 36) befinden.

5. Verbindungsstück nach Anspruch 4, dadurch **gekennzeichnet**, daß die Vorsprünge (38, 39) schmaler als ein Durchbruch im Wischarm sind.

6. Verbindungsstück nach Anspruch 4 oder 5, dadurch **gekennzeichnet**, daß die beiden Zungen (35, 36), in Längsrichtung des Schenkels (11) betrachtet, ihren Fuß (30) an derselben Stelle haben, also an derselben Stelle an den Schenkel (11) angebunden sind.

7. Verbindungsstück nach Anspruch 4, 5 oder 6, dadurch **gekennzeichnet**, daß die beiden Zungen (35, 36) vorzugsweise im wesentlichen gleich ausgebildet sind und sich die eine Zunge (35, 36) im wesentlichen auf der einen Seite und die andere Zunge (36, 35) im wesentlichen auf der anderen Seite einer längs des Schenkels (11) verlaufenden Mittellinie (37) befindet.

8. Verbindungsstück nach einem der Ansprüche 4 bis 7, dadurch **gekennzeichnet**, daß im Bereich eines Vorsprungs (38, 39) die Zunge (35, 36) mit diesem Vorsprung (38, 39) zu Lasten der anderen Zunge (36, 35) verbreitert ist.

9. Verbindungsstück nach den Ansprüchen 7 und 8, dadurch **gekennzeichnet**, daß eine Zunge (35, 36) im Bereich eines Vorsprungs (38, 39) bis jenseits der Mittelinie (37) verbreitert ist.

10. Verbindungsstück nach Anspruch 9, dadurch **gekennzeichnet**, daß die Vorsprünge (38, 39) von der der anderen Zunge (36, 35) abgewandten äußeren Längskante (41) einer Zunge (35, 36) einen Abstand haben und daß eine Zunge (35, 36) im Bereich eines Vorsprungs (38, 39) weniger als bis zur Außenseite des Vorsprungs (39, 38) der anderen Zunge (36, 35) verbreitert ist.

11. Verbindungsstück nach Anspruch 10, dadurch **gekennzeichnet**, daß eine Zunge (35, 36) im Bereich des Vorsprungs (39, 38) der anderen Zunge (36, 35) noch breiter ist als der Abstand ihres Vorsprungs (38, 39) von der äußeren Längskante (41).

12. Verbindungsstück nach einem der Ansprüche 8 bis 11, dadurch **gekennzeichnet**, daß sich der verbreiterte Abschnitt (42) der einen Zunge (35, 36) unmittelbar an den verbreiterten Abschnitt (42) der anderen Zunge (36, 35) anschließt bzw. daß sich der verbreiterte Abschnitt (42) einer Zunge (35, 36) unmittelbar an den verschmälerten Abschnitt (43) dieser Zunge (35, 36) anschließt.

13. Verbindungsstück nach einem der Ansprüche 4 bis 12, dadurch **gekennzeichnet**, daß die Vorsprünge (38, 39) der beiden Zungen (35, 36) etwa um die Länge eines Vorsprungs (38, 39) gegeneinander versetzt sind.

14. Verbindungsstück nach einem der Ansprüche 4 bis 13, dadurch **gekennzeichnet**, daß die beiden Zungen (35, 36) am freien Ende Lösetasten (40) aufweisen, in deren Bereich die Zungen (35, 36) an den einander abgewandten Außenkanten (41) verbreitert sind.

15. Verbindungsstück nach einem der Ansprüche 3 bis 14, dadurch **gekennzeichnet**, daß die Aufnahme (17) für den Gelenkbolzen einen Abstand zur Ache (28) des die beiden Schenkel (10, 11) verbindenden Scheitels (12) hat und ein Vorsprung (26) im Breich der Aufnahme (17) angeordnet ist und daß sich der Fuß (30) der federnden Zunge (25) mit diesem Vorsprung (26) im Bereich zwischen der Achse (28) des Scheitels (12) und der Achse (29) der Aufnahme (17) in einem Abstand zur Achse (29) der Aufnahme (17) befindet, der größer als der Abstand von der Achse (28) des Scheitels (12) ist.

16. Verbindungsstück nach einem der Ansprüche 3 bis 15, **dadurch gekennzeichnet**, daß die Aufnahme (17) für den Gelenkbolzen einen Abstand zur Achse (28) des die beiden Schenkel (10, 11) verbindenden Scheitels (12) hat und ein Vorsprung (38, 39) in einem größeren Abstand vom Scheitel (12) angeordnet ist als die Aufnahme (17) und daß sich der Fuß (30) der federnden Zunge (35, 36) mit diesem Vorsprung (38, 39) im Bereich der Aufnahme (17) befindet.

17. Wischblatt mit einem Verbindungsstück nach einem der Ansprüche 1 bis 16.

## Patentansprüche (Patentansprüche für folgende(n) Vertragsstaat(en): SE)

1. Verbindungsstück für einen Scheibenwischer zur Anlenkung eines Wischblatts an einen mit einem hakenförmigen Ende versehenen Wischarm, das im wesentlichen eine U-Form mit zwei Schenkein (10,11) aufweist, die zwischen sich eine Aufnahme (17) für einen Gelenkbolzen des Wischblatts bilden und vom hakenförmigen Ende des Wischarms umgreifbar sind, und das zwei in Längsrichtung der Schenkel (10,11) gegeneinander versetzte und sich an der Außenseite der Schenkel (10,11) befindliche, federnd auslenkbare Vorsprünge ((26 und 38) oder (26 und 39) oder (38 und 39)), insbesondere Rastvorsprünge, zum Eingriff in einen Durchbruch oder Rücksprung des Wischarms besitzt, dadurch **gekennzeichnet**, daß die beiden Vorsprünge (26 und 38) oder (26 und 39) oder (38 und 39) unabhängig voneinander federnd auslenkbar sind.

2. Verbindungsstück nach Anspruch 1, dadurch **gekennzeichnet**, daß sich einer von zwei Vorsprüngen (26 und 38) oder (26 und 39) an der Außenseite des einen Schenkels (10,11) und der andere von zwei Vorsprüngen (26 und 38) oder (26 und 39) an der Außenseite des anderen Schenkels (11,10) befindet.

3. Verbindungsstück nach Anspruch 1 oder 2, dadurch **gekennzeichnet**, daß sich einer der Vorsprünge (26,38,39) an einer federnden Zunge (25,35,36) befindet, die längs eines Schenkels (10,11) aus diesem ausgeschnitten ist.

4. Verbindungsstück nach einem der Ansprüche 1 bis 3, dadurch gekennzeichnet, daß sich zwei Vorsprünge (38, 39) außen am selben Schenkel (11) und an nebeneinanderliegenden längs aus dem Schenkel (11) ausgeschnittenen und einzeln auslenkbaren federnden Zungen (35, 36) befinden.

5. Verbindungsstück nach Anspruch 4, dadurch gekennzeichnet, daß die Vorsprünge (38, 39) schmaler als ein Durchbruch im Wischarm sind.

6. Verbindungsstück nach Anspruch 4 oder 5, dadurch gekennzeichnet, daß die beiden Zungen (35, 36), in Längsrichtung des Schenkels (11) betrachtet, ihren Fuß (30) an derselben Stelle haben, also an derselben Stelle an den Schenkel (11) angebunden sind.

7. Verbindungsstück nach Anspruch 4, 5 oder 6, dadurch gekennzeichnet, daß die beiden Zungen (35, 36) vorzugsweise im wesentlichen gleich ausgebildet sind und sich die eine Zunge (35, 36) im wesentlichen auf der einen Seite und die andere Zunge (36, 35) im wesentlichen auf der anderen Seite einer längs des Schenkeis (11) verlaufenden Mittellinie (37) befindet.

8. Verbindungsstück nach einem der Ansprüche 4 bis 7, dadurch gekennzeichnet, daß im Bereich eines Vorsprungs (38, 39) die Zunge (35, 36) mit diesem Vorsprung (38, 39) zu Lasten der anderen Zunge (36, 35) verbreitert ist.

9. Verbindungsstück nach den Ansprüchen 7 und 8, dadurch gekennzeichnet, daß eine Zunge (35, 36) im Bereich eines Vorsprungs (38, 39) bis jenseits der Mittellinie (37) verbreitert ist.

10. Verbindungsstück nach Anspruch 9, dadurch gekennzeichnet, daß die Vorsprünge (38, 39) von der der anderen Zunge (36, 35) abgewandten äußeren Längskante (41) einer Zunge (35, 36) einen Abstand haben und daß eine Zunge (35, 36) im Bereich eines Vorsprungs (38, 39) weniger als bis zur Außenseite des Vorsprungs (39, 38) der anderen Zunge (36, 35) verbreitert ist.

11. Verbindungsstück nach Anspruch 10, dadurch gekennzeichnet, daß eine Zunge (35, 36) im Bereich des Vorsprungs (39, 38) der anderen Zunge (36, 35) noch breiter ist als der Abstand ihres Vorsprungs (38, 39) von der äußeren Längskante (41).

12. Verbindungsstück nach einem der Ansprüche 8 bis 11, dadurch gekennzeichnet, daß sich der verbreiterte Abschnitt (42) der einen Zunge (35, 36) unmittelbar an den verbreiterten Abschnitt (42) der anderen Zunge (36, 35) anschließt bzw. daß sich der verbreiterte Abschnitt (42) einer Zunge (35, 36) unmittelbar an den verschmälerten Abschnitt (43) dieser Zunge (35, 36) anschließt.

13. Verbindungsstück nach einem der Ansprüche 4 bis 12, dadurch gekennzeichnet, daß die Vorsprünge (38, 39) der beiden Zungen (35, 36) etwa um die Länge eines Vorsprungs (38, 39) gegeneinander versetzt sind.

14. Verbindungsstück nach einem der Ansprüche 4 bis 13, dadurch gekennzeichnet, daß die beiden Zungen (35, 36) am freien Ende Lösetasten (40) aufweisen, in deren Bereich die Zungen (35, 36) an den einander abgewandten Außenkanten (41) verbreitert sind.

15. Verbindungsstück nach einem der Ansprüche 3 bis 14, dadurch gekennzeichnet, daß die Aufnahme (17) für den Gelenkbolzen einen Abstand zur Achse (28) des die beiden Schenkel (10, 11) verbindenden Scheitels (12) hat und ein Vorsprung (26) im Bereich der Aufnahme (17) angeordnet ist und daß sich der Fuß (30) der federnden Zunge (25) mit diesem Vorsprung (26) im Bereich zwischen der Achse (28) des Scheitels (12) und der Achse (29) der Aufnahme (17) in einem Abstand zur Achse (29) der Aufnahme (17) befindet, der größer als der Abstand von der Achse (28) des Scheitels (12) ist.

16. Verbindungsstück nach einem der Ansprüche 3 bis 15, dadurch gekennzeichnet, daß die Aufnahme (17) für den Gelenkbolzen einen Abstand zur Achse (28) des die beiden Schenkel (10, 11) verbindenden Scheitels (12) hat und ein Vorsprung (38, 39) in einem größeren Abstand vom Scheitel (12) angeordnet ist als die Aufnahme (17) und daß sich der Fuß (30) der federnden Zunge (35, 36) mit diesem Vorsprung (38, 39) im Bereich der Aufnahme (17) befindet.

17. Wischblatt mit einem Verbindungsstück nach einem der Ansprüche 1 bis 16.

## Claims (Claims for the following Contracting State(s): ES, FR, GB, IT)

1. A coupling element for a windscreen wiper for hinging a wiping blade to a wiper arm provided with a hook-type end, which is substantially of a U-shaped configuration with two legs (10,11) forming between them a receiving means (17) for a pivotable bolt of the wiping blade and being adapted to be embraced by the hook-shaped end of the wiper arm, and which comprises two projections (38,.39), in particular, locking lugs, staggered with respect to one another in the longitudinal direction of the legs (10,11) and located on the outer side of one of the two legs (10,11) and being resiliently deflected independently of one another, for engagement with an opening or recess of the wiper arm.

2. A coupling element according to claim 1, characterized in that another projection (26) is located on the outer side of the other leg (10).

3. A coupling element according to claims 1 or 2, characterized in that a projection (26,38,39) is provided on a resilient tongue (25,35,36) which is cut from a leg (10,11) along thereof

4. A coupling element according to any one of claims 1 to 3, characterized in that the two projections (38,39) are located externally on the same leg (11) on individually deflected resilient tongues (35,36) arranged in side-by-side relationship and longitudinally cut from the leg (11).

5. A coupling element according to claim 4, characterized in that the projections (38,39) are narrower than an opening within the wiper arm.

6. A coupling element according to claims 4 or 5, characterized in that the two tongues (35,36), viewed in the longitudinal direction of the leg (11), have their base (30) at the same point, i.e. they are connected at the same point to leg (11).

7. A coupling element according to claims 4,5 or 6, characterized in that the two tongues (35,36), preferably, are of a substantially identical configuration, and that the one tongue (35,36) substantially is located on the one side and the other tongue (36,35) substantially is located on the other side of a central line (37) extending along the leg (11).

8. A coupling element according to any one of claims 4 to 7, characterized in that in the area of a projection (38,39) the tongue (35,36) with the said projection (38,39) is broadened at the expense of the said other tongue (36,35).

9. A coupling element according to claims 7 and 8, characterized in that one tongue (35,36) is broadened in the area of projection (38,39) by an amount to exceed the central line (37).

10. A coupling element according to claim 9, characterized in that the projections (38,39) are at a distance from the outer longitudinal edge (41) of a tongue (35,36) facing away from the said other tongue (36,35), and that a tongue (35,36) in the area of a projection (38,39) is broadened by an amount not to exceed the outer side of the projection (39,38) of the said other tongue (36,35).

11. A coupling element according to claim 10, characterized in that one tongue (35,36), in the area of the projection (39,38) of the said other tongue (36,35) is still broader than the distance of its projection (38,39) from the outer longitudinal edge (41).

12. A coupling element according to any one of claims 8 through 11, characterized in that the broadened section (42) of the one tongue (35,36) directly joins the broadened section (42) of the other tongue (36,35) and that the broadened section (42) of a tongue (35,36) directly joins the narrowed section (43) of the said tongue (35,36), respectively.

13. A coupling element according to any one of claims 4 to 12, characterized in that the projections (38,39) of the two tongues (35,36) are staggered with respect to one another approximately by the length of a projection (38,39).

14. A coupling element according to any one of claims 4 to 13, characterized in that the two tongues (35,36), on the free ends thereof, have release buttons (40) in the area of which the tongues (35,36) are broadened on the outer edges (41) facing away from one another.

15. A coupling element according to any one of claims 3 to 14, characterized in that the receiving means (17) for the pivotable bolt is at a distance from the axis (28) of the apex (12) interconnecting the two legs (10,11), and that a projection (26) is provided in the area of the receiving means (17), and that the base (30) of the resilient tongue (25) with the said projection (26), in the area between the axis (28) of the apex (12) and the axis (29) of the receiving means (17), is at a distance from the axis (29) of the receiving means (17) which exceeds the distance from the axis (28) of the apex (12).

16. A coupling element according to any one of claims 3 to 15, characterized in that the receiving means (17) for the pivotable bolt is at a distance from the axis (28) of the apex (12) interconnecting the two legs (10,11), and that a projection (38,39) is arranged at a larger distance from the apex (12) than the receiving means (17), and that the base (30) of the resilient tongue (35,36) with the said projection (38,39) is located in the area of the receiving means (17).

17. A wiping blade comprising a coupling means according to any one of claims 1 to 16.

## Claims (Claims for the following Contracting State(s): SE)

1. A coupling element for a windscreen wiper for hinging a wiping blade to a wiper arm provided with a hook-shaped end which is of a substantially U-shaped configuration having two legs (10,11) forming between them a receiving means (17) for a pivotable bolt of the wiping blade and being adapted to be embraced by the hook-shaped end of the wiper arm, and which comprises two resiliently deflected projections (26 and 38) or (26 and 39) or (38 and 39), in particular, locking lugs staggered with respect to one another in the longitudinal direction of the legs (10,11) and provided on the outer side of the legs (10,11) for engagement with an opening or recess of the wiper arm, characterized in that the two projections (26 and 38) or (26 and 39) or (38 and 39) are resiliently deflected independently of one another.

2. A coupling element according to claim 1, characterized in that one of two projections (26 and 38) or (26 and 39) is located on the outer side of the one leg (10,11) and the other of two projections (26 and 38) or (26 and 39) is located on the outer side of the other leg (11,10).

3. A coupling element according to claims 1 or 2, characterized in that one of the projections (26,38,39) is located on a resilient tongue (25,35,36) which is cut from a leg (10,11) longitudinally thereof.

4. A coupling element according to any one of claims 1 to 3, characterized in that two projections (38,39) are located externally on the same leg (11) and on individually deflected resilient tongues (35,36) arranged in side-by-side relationship and longitudinally cut from the leg (11).

5. A coupling element according to claim 4, characterized in that the projections (38,39) are narrower than an opening in the wiper arm.

6. A coupling element according to claims 4 or 5, characterized in that the two tongues (35,36), viewed in the longitudinal direction of the leg (11), have their bases (30) at the same point, i.e. they are connected at the same point to the leg (11).

7. A coupling element according to claims 4,5 or 6, characterized in that the two tongues (35,36), preferably, are of a substantially identical configuration, and that the one tongue (35,36) substantially is located on the one side and the other tongue (36,35) substantially is located on the other side of a central line (37) extending along the leg (11).

8. A coupling element according to any one of claims 4 to 7, characterized in that in the area of a projection (38,39) the tongue (35,36) with the said projection (38,39) is broadened at the expense of the other tongue (36,35).

9. A coupling element according to claims 7 and 8, characterized in that one tongue (35,36), in the area of a projection (38,39), is broadened by an amount to exceed the central line (37).

10. A coupling element according to claim 9, characterized in that the projections (38,39) are at a distance from the outer longitudinal edge (41) of a tongue (35,36) facing away from the other tongue (35,36), and that one tongue (35,36), in the area of a projection (38,39), is broadened by an amount not to exceed the outer side of the projection (39,38) of the other tongue (36,35).

11. A coupling according to claim 10, characterized in that one tongue (35,36), in the area of the projection (39,38) of the other tongue (36,35), is still broader than the distance of the projection (38,39) thereof from the outer longitudinal edge (41).

12. A coupling element according to any one of claims 8 to 11, characterized in that the broadened section (42) of the one tongue (35,36) directly joins the broadened section (42) of the other tongue (36,35) and that the broadened section (42) of a tongue (35,36) directly joins the narrowed section (43) of the said tongue (35,36).

13. A coupling element according to any one of claims 4 to 12, characterized in that the projections (38,39) of the two tongues (35,36) are staggered with respect to one another approximately by the length of a projection (38,39).

14. A coupling element according to any one of claims 4 to 13, characterized in that the two tongues (35,36) on the free ends thereof are provided with release buttons (40) in the area of which the tongues (35,36) are broadened on the outer edges (41) facing away from one another.

15. A coupling element according to any one of claims 3 to 14, characterized in that the receiving means (17) for the pivotable bolt is at a distance from the axis (28) of the apex (12) interconnecting the two legs (10,11) and that a projection (26) is arranged in the area of the receiving means (17), and that the base (30) of the resilient tongue (25) with the said projection (26) is located in the area between the axis (28) of the apex (12) and the axis (29) of the receiving means (17) at a distance from the axis (29) of the receiving means (17) exceeding the distance from the axis (28) of the apex (12).

16. A coupling element according to any one of claims 3 to 15, characterized in that the receiving means (17) for the pivotable bolt is at a distance from the axis (28) of the apex interconnecting the two legs (10,11) and that a projection (38,39) is arranged at a greater distance from the apex (12) than the receiving means (17), and that the base (30) of the resilient tongue (35,36) with the said projection (38,39) is located in the area of the receiving means (17).

17. A wiping blade comprising a coupling element according to any one of claims 1 to 16.

## Revendications (Revendications pour l'(les) Etat(s) contractant(s) suivant(s): ES, FR, GB, IT)

1. Pièce de jonction pour essuie-glace, destinée au montage articulé d'un balai d'essuie-glace sur un bras d'essuie-glace pourvu d'une extrémité en forme de crochet, qui présente dans l'ensemble une forme en U comportant deux branches (10, 11) qui forment entre elles un logement (17) pour un axe d'articulation du balai d'essuie-glace, qui sont agencées de façon à pouvoir être entourées par l'extrémité en forme de crochet du bras d'essuie-glace et qui comportent deux saillies (38, 39), notamment des saillies d'enclenchement, destinées à s'emboîter dans une ouverture ou une partie en retrait du bras d'essuie-glace, qui sont situées sur la face extérieure de l'une des deux branches (10, 11), sont décalées l'une vis-à-vis de l'autre suivant la direction longitudinale des branches (10, 11) et sont agencées de façon à pouvoir être repoussées élastiquement d'une manière indépendante l'une de l'autre.

2. Pièce de jonction suivant la revendication 1, caractérisée en ce qu'une autre saillie (26) est située sur la face extérieure de la seconde branche (10).

3. Pièce de jonction suivant la revendication 1 ou 2, caractérisée en ce qu'une saillie (26, 38, 39) est située sur une languette élastique (25, 35, 36) qui est découpée dans une branche (10, 11) le long de cette branche.

4. Pièce de jonction suivant l'une des revendications 1 à 3, caractérisée en ce que les deux saillies (38, 39) sont situées extérieurement sur la même branche (11), sur des languettes élastiques (35, 36) qui sont découpées dans la branche (11) l'une à côté de l'autre et suivant la direction longitudinale et sont agencées de façon à pouvoir être repoussées individuellement.

5. Pièce de jonction suivant la revendication 4, caractérisée en ce que les saillies (38, 39) sont plus étroites qu'une ouverture pratiquée dans le bras d'essuie-glace.

6. Pièce de jonction suivant la revendication 4 ou 5, caractérisée en ce que, suivant la direction longitudinale de la branche (11), les deux languettes (35, 36) ont leur base (30) au même emplacement, c'est-à-dire sont solidaires de la branche (11) au même emplacement.

7. Pièce de jonction suivant la revendication 4, 5 ou 6, caractérisée en ce que les deux languettes (35, 36) sont de préférence réalisées d'une manière pour l'essentiel identique et en ce que l'une des languettes (35, 36) est située pour l'essentiel d'un premier côté d'un plan médian (37) s'étendant le long de la branche (11) et la seconde languette (36, 35) est située pour l'essentiel de l'autre côté de ce plan médian.

8. Pièce de jonction suivant l'une des revendications 4 à 7, caractérisée en ce que, dans la zone d'une saillie (38, 39), la languette (35, 36) comportant cette saillie (38, 39) est élargie aux dépens de l'autre languette (36, 35).

9. Pièce de jonction suivant les revendications 7 et 8, caractérisée en ce qu'une languette (35, 36) est élargie, dans la zone d'une saillie (38, 39), jusque de l'autre côté du plan médian (37).

10. Pièce de jonction suivant la revendication 9, caractérisée en ce que les saillies (38, 39) présentent un espacement vis-à-vis du bord longitudinal extérieur (41) d'une languette (35, 36) qui est situé à l'opposé de l'autre languette (36, 35) et en ce qu'une languette (35, 36) est élargie, dans la zone d'une saillie (38, 39), sans s'étendre jusqu'à la face extérieure de la saillie (39, 38) de l'autre languette (36, 35).

11. Pièce de jonction suivant la revendication 10, caractérisée en ce qu'une languette (35, 36) a, dans la zone de la saillie (39, 38) de l'autre languette (36, 35), une largeur encore supérieure à la distance de sa saillie (38, 39) vis-à-vis du bord longitudinal extérieur (41).

12. Pièce de jonction suivant l'une des revendications 8 à 11, caractérisée en ce que la section élargie (42) de l'une des languettes (35, 36) est directement adjacente à la section élargie (42) de l'autre languette (36, 35) ou en ce que la section élargie (42) d'une languette (35, 36) est directement adjacente à la section rendue plus étroite (43) de cette languette (35, 36).

13. Pièce de jonction suivant l'une des revendications 4 à 12, caractérisée en ce que les saillies (38, 39) des deux languettes (35, 36) sont décalées l'une vis-à-vis de l'autre d'approximativement la longueur d'une saillie (38, 39).

14. Pièce de jonction suivant l'une des revendications 4 à 13, caractérisée en ce que les deux languettes (35, 36) comportent, à leur extrémité libre, des poussoirs de libération (40) dans la zone desquels les languettes (35, 36) sont élargies à l'endroit des bords extérieurs (41) qui sont situés à l'opposé l'un de l'autre.

15. Pièce de jonction suivant l'une des revendications 3 à 14, caractérisée en ce que le logement (17) prévu pour l'axe d'articulation présente un espacement vis-à-vis de l'axe (28) du sommet (12) reliant les deux branches (10, 11), en ce qu'une saillie (26) est située dans la zone du logement (17) et en ce que la base (30) de la languette élastique (25) comportant cette saillie (26) est située, dans la zone comprise entre l'axe (28) du sommet (12) et l'axe (29) du logement (17), à une distance vis-à-vis de l'axe (29) du logement (17) qui est supérieure à la distance vis-à-vis de l'axe (28) du sommet (12).

16. Pièce de jonction suivant l'une des revendications 3 à 15, caractérisée en ce que le logement (17) prévu pour l'axe d'articulation présente un espacement vis-à-vis de l'axe (28) du sommet (12) réunissant les deux branches (10, 11), en ce qu'une saillie (38, 39) est située à une plus grande distance du sommet (12) que le logement (17) et en ce que la base (30) de la languette élastique (35, 36) comportant cette saillie (38, 39) est située dans la zone du logement (17).

17. Balai d'essuie-glace comportant une pièce de jonction suivant l'une des revendications 1 à 16.

## Revendications (Revendications pour l'(les) Etat(s) contractant(s) suivant(s): SE)

1. Pièce de jonction pour essuie-glace, destinée au montage articulé d'un balai d'essuie-glace sur un bras d'essuie-glace pourvu d'une extrémité en forme de crochet, qui présente dans l'ensemble une forme en U comportant deux branches (10, 11) qui forment entre elles un logement (17) pour un axe d'articulation du balai d'essuie-glace, qui sont agencées de façon à pouvoir être entourées par l'extrémité en forme de crochet du bras d'essuie-glace et qui comportent deux saillies ((26 et 38) ou (26 et 39) ou (38, 39)), notamment des saillies d'enclenchement, destinées a s'emboîter dans une ouverture ou une partie en retrait du bras d'essuie-glace, qui sont situées sur la face extérieure des branches (10, 11), sont décalées l'une vis-à-vis de l'autre suivant la direction longitudinale des branches (10, 11) et sont agencées de façon à pouvoir être repoussées élastiquement, caractérisée en ce que les deux saillies ((26 et 38) ou (26 et 39) ou (38 et 39)) sont agencées de façon à pouvoir être repoussées élastiquement d'une manière indépendante l'une de l'autre.

2. Pièce de jonction suivant la revendication 1, caractérisée en ce que l'une parmi deux saillies ((26 et 38) ou (26 et 39)) est située sur la face extérieure d'une première branche (10, 11) et l'autre de ces deux saillies ((26 et 38) ou (26 et 39) est située sur la face extérieure de l'autre branche (11, 10).

3. Pièce de jonction suivant la revendication 1 ou 2, caractérisée en ce qu'une saillie (26, 38, 39) est située sur une languette élastique (25, 35, 36) qui est découpée dans une branche (10, 11) le long de cette branche.

4. Pièce de jonction suivant l'une des revendications 1 à 3, caractérisée en ce que les deux saillies (38, 39) sont situées extérieurement sur la même branche (11), sur des languettes élastiques (35, 36) qui sont découpées dans la branche (11) l'une à côté de l'autre et suivant la direction longitudinale et sont agencées de façon à pouvoir être repoussées individuellement.

5. Pièce de jonction suivant la revendication 4, caractérisée en ce que les saillies (38, 39) sont plus étroites qu'une ouverture pratiquée dans le bras d'essuie-glace.

6. Pièce de jonction suivant la revendication 4 ou 5, caractérisée en ce que, suivant la direction longitudinale de la branche (11), les deux languettes (35, 36) ont leur base (30) au même emplacement, c'est-à-dire sont solidaires de la branche (11) au même emplacement.

7. Pièce de jonction suivant la revendication 4, 5 ou 6, caractérisée en ce que les deux languettes (35, 36) sont de préférence réalisées d'une manière pour l'essentiel identique et en ce que l'une des languettes (35, 36) est située pour l'essentiel d'un premier côté d'un plan médian (37) s'étendant le long de la branche (11) et la seconde languette (36, 35) est située pour l'essentiel de l'autre côté de ce plan médian.

8. Pièce de jonction suivant l'une des revendications 4 à 7, caractérisée en ce que, dans la zone d'une saillie (38, 39), la languette (35, 36) comportant cette saillie (38, 39) est élargie aux dépens de l'autre languette (36, 35).

9. Pièce de jonction suivant les revendications 7 et 8, caractérisée en ce qu'une languette (35, 36) est élargie, dans la zone d'une saillie (38, 39), jusque de l'autre côté du plan médian (37).

10. Pièce de jonction suivant la revendication 9, caractérisée en ce que les saillies (38, 39) présentent un espacement vis-à-vis du bord longitudinal extérieur (41) d'une languette (35, 36) qui est situé à l'opposé de l'autre languette (36, 35) et en ce qu'une languette (35, 36) est élargie, dans la zone d'une saillie (38, 39), sans s'étendre jusqu'à la face extérieure de la saillie (39, 38) de l'autre languette (36, 35).

11. Pièce de jonction suivant la revendication 10, caractérisée en ce qu'une languette (35, 36) a, dans la zone de la saillie (39, 38) de l'autre languette (36, 35), une largeur encore supérieure à la distance de sa saillie (38, 39) vis-à-vis du bord longitudinal extérieur (41).

12. Pièce de jonction suivant l'une des revendications 8 à 11, caractérisée en ce que la section élargie (42) de l'une des languettes (35, 36) est directement adjacente à la section élargie (42) de l'autre languette (36, 35) ou en ce que la section élargie (42) d'une languette (35, 36) est directement adjacente à la section rendue plus étroite (43) de cette languette (35, 36).

13. Pièce de jonction suivant l'une des revendications 4 à 12, caractérisée en ce que les saillies (38, 39) des deux languettes (35, 36) sont décalées l'une vis-à-vis de l'autre d'approximativement la longueur d'une saillie (38, 39).

14. Pièce de jonction suivant l'une des revendications 4 à 13, caractérisée en ce que les deux languettes (35, 36) comportent, à leur extrémité libre, des poussoirs de libération (40) dans la zone desquels les languettes (35, 36) sont élargies à l'endroit des bords extérieurs (41) qui sont situés à l'opposé l'un de l'autre.

15. Pièce de jonction suivant l'une des revendications 3 à 14, caractérisée en ce que le logement (17) prévu pour l'axe d'articulation présente un espacement vis-à-vis de l'axe (28) du sommet (12) reliant les deux branches (10, 11), en ce qu'une saillie (26) est située dans la zone du logement (17) et en ce que la base (30) de la languette élastique (25) comportant cette saillie (26) est située, dans la zone comprise entre l'axe (28) du sommet (12) et l'axe (29) du logement (17), à une distance vis-à-vis de l'axe (29) du logement (17) qui est supérieure à la distance vis-à-vis de l'axe (28) du sommet (12).

16. Pièce de jonction suivant l'une des revendications 3 à 15, caractérisée en ce que le logement (17) prévu pour l'axe d'articulation présente un espacement vis-à-vis de l'axe (28) du sommet (12) réunissant les deux branches (10, 11), en ce qu'une saillie (38, 39) est située à une plus grande distance du sommet (12) que le logement (17) et en ce que la base (30) de la languette élastique (35, 36) comportant cette saillie (38, 39) est située dans la zone du logement (17).

17. Balai d'essuie-glace comportant une pièce de jonction suivant l'une des revendications 1 à 16.
